# FASCICULE DE BREVET EUROPEEN

(11) **EP 4 256 189 B1**
(45) Date de publication et mention de la délivrance du brevet: **13.11.2024**
(21) Numéro de dépôt: 21830721.3
(22) Date de dépôt: 30.11.2021
(51) Int. Cl.: F02C 7/224, F02C 7/14

(54) **ENSEMBLE POUR TURBOMACHINE D'AERONEF COMPRENANT UNE VANNE PASSIVE DE CONTOURNEMENT D'UN ECHANGEUR DE CHALEUR CARBURANT / HUILE**
FLUGZEUGTURBINENTRIEBWERKANORDNUNG MIT EINEM PASSIVEN VENTIL ZUM BYPASS EINES BRENNSTOFF-ÖL-WÄRMETAUSCHERS
AIRCRAFT TURBINE ENGINE ASSEMBLY COMPRISING A PASSIVE VALVE FOR BY-PASSING A FUEL/OIL HEAT EXCHANGER

(30) Priorité: 01.12.2020 FR 2012469
(43) Date de publication de la demande: 11.10.2023
(73) Titulaire: SAFRAN AIRCRAFT ENGINES, 75015 Paris (FR)
(72) Inventeur: ORIOL, Sébastien, 77550 MOISSY-CRAMAYEL (FR); COTEREAU, Nicolas, Vincent, Pierre-Yves, 77550 MOISSY-CRAMAYEL (FR); BOUTALEB, Mohammed-Lamine, 77550 MOISSY-CRAMAYEL (FR)
(74) Mandataire: Brevalex
(86) Numéro de dépôt international: PCT/FR2021/052150
(87) Numéro de publication internationale: WO 2022/117947

(56) Documents cités:
- EP-A1- 0 721 061
- WO-A1-2012/093235
- FR-A1- 2 690 710
- FR-A1- 2 914 365
- FR-A1- 3 001 253
- FR-A1- 3 088 956

## Description

### DOMAINE TECHNIQUE

La présente invention se rapporte au domaine des turbomachines d'aéronef, tels que des turboréacteurs et des turbopropulseurs. Elle concerne plus précisément les échangeurs de chaleur carburant / huile équipant de telles turbomachines.

### ETAT DE LA TECHNIQUE ANTERIEURE

Une turbomachine d'aéronef est généralement équipée de plusieurs échangeurs de chaleur carburant / huile, qui permettent de transférer les réjections thermiques du moteur, récupérées par l'huile, vers le carburant servant alors de source froide au sein de l'échangeur. Le carburant réchauffé par l'huile est ensuite envoyé dans la chambre de combustion de la turbomachine, ce qui permet de réutiliser une partie de la puissance calorifique transférée pour améliorer le rendement de combustion.

Un ou plusieurs échangeurs de chaleur carburant / huile peuvent ainsi être agencés à la jonction entre un circuit d'huile de lubrification, et un dispositif d'alimentation en carburant. Le circuit d'huile de lubrification comporte des éléments conventionnels comme un ou plusieurs réservoirs d'huile, un groupe de lubrification comprenant au moins une pompe à huile, un filtre à huile, une ou plusieurs enceintes à pressuriser, etc. Par ailleurs, le dispositif d'alimentation en carburant de la turbomachine comporte habituellement un circuit d'alimentation en carburant de la chambre de combustion, ainsi qu'un circuit de dérivation pour l'alimentation des systèmes hydrauliques en carburant sous pression comme fluide hydraulique. En effet, les turbomachines d'aéronef comportent de nombreux organes réglables à géométrie variable, tels que des inverseurs de poussée, ou des aubes de stator à pas variable, mais aussi des volets, des vannes de refroidissement à air ou des vannes de régulation de jeux. Pour actionner ces organes, il est effectivement courant d'utiliser des actionneurs hydrauliques, c'est-à-dire tout système hydraulique utilisant un différentiel de pression dans un fluide d'actionnement pour actionner un travail dans un organe mécanique, incluant ainsi les vérins hydrauliques et les commandes hydrauliques de servovalves. Le fluide hydraulique actionnant ces systèmes peut donc être du carburant sous pression, provenant du dispositif d'alimentation en carburant de la turbomachine.

Dans la plupart des architectures de turbomachine, l'échangeur carburant / huile se trouve à un emplacement qui génère un niveau de pression de carburant supérieur à celui de l'huile. Par conséquent, en raison de ce différentiel de pression observé dans l'échangeur, une dégradation de ce dernier peut conduire à une fuite de carburant vers le circuit d'huile de lubrification. Ce cas de fuite est communément appelé « Fuel-in-Oil », expression de langue anglaise pouvant être traduite par « carburant dans l'huile ». Il constitue un scénario particulièrement redouté, car il peut entraîner des dommages importants sur la turbomachine. Le risque réside essentiellement dans le fait qu'en cas de fuite, du carburant peut se mélanger à l'huile et atteindre les enceintes du moteur à température élevée, avec un risque d'auto-inflammation du carburant, puis de feu, par combustion de l'huile dans les enceintes.

Dans l'art antérieur, plusieurs solutions ont été proposées pour éviter les dommages qui pourraient être causés par l'augmentation du volume de fluide dans le circuit d'huile, en cas de fuite « Fuel-in-Oil ». L'une de ces solutions est par exemple connue du document FR 3 068 102 A1.

D'autres solutions techniques ont été proposées plus récemment, mettant en oeuvre des architectures dans lesquelles les niveaux de pression dans le circuit d'huile sont supérieurs à ceux des circuits d'huiles conventionnels. Ainsi, dans l'échangeur de chaleur carburant / huile, l'huile se trouve à une pression supérieure à celle du carburant. Dans ces architectures, il existe seulement un risque de fuite inverse, dénommé « Oil-in-Fuel », expression de langue anglaise pouvant être traduite par « huile dans le carburant ». Mais même en cas de dégradation de ce phénomène de fuite « Oil-in-Fuel », l'impact sur le moteur reste négligeable en comparaison du risque inverse de fuite « Fuel-in-Oil ». Cependant, la quantité d'huile disponible dans le réservoir du circuit d'huile de lubrification reste limitée. Si cette fuite se produit sur une longue durée et/ou avec un débit élevé, elle est susceptible d'entraîner une vidange du réservoir, et donc une baisse importante des niveaux de pression dans le circuit d'huile. Ce phénomène pourrait alors provoquer une inversion du différentiel de pression entre l'huile et le carburant dans l'échangeur, et le circuit d'huile redeviendrait alors de nouveau vulnérable au risque critique de fuite « Fuel-in-Oil ».

Pour limiter le risque d'inversion du différentiel de pression entre l'huile et le carburant dans l'échangeur, il est possible d'augmenter la quantité d'huile ainsi que le dimensionnement des enceintes à pressuriser dans le circuit d'huile. Cependant, ces solutions sont impactantes en termes de masse.

Les documents EP 0 721 061 A1 et FR 3 001 253 A1 divulguent d'autres turbomachines de l'art antérieur.

### EXPOSÉ DE L'INVENTION

Pour répondre au moins partiellement aux inconvénients décrits ci-dessus, l'invention a tout d'abord pour objet un ensemble pour une turbomachine d'aéronef, comprenant un circuit d'huile de lubrification ainsi qu'un dispositif d'alimentation en carburant de la turbomachine, le circuit d'huile et le dispositif d'alimentation en carburant ayant en commun un échangeur de chaleur carburant / huile.

Selon l'invention, l'ensemble comporte également une vanne passive de contournement permettant à l'huile du circuit d'huile de lubrification de contourner l'échangeur, la vanne de contournement comprenant un corps de vanne ainsi qu'un piston agencé mobile dans un espace de coulissement pratiqué dans le corps de vanne, l'espace de coulissement définissant, respectivement de part et d'autre du piston, une première chambre d'actionnement alimentée par l'huile du circuit d'huile, ainsi qu'une seconde chambre d'actionnement alimentée en carburant du dispositif d'alimentation en carburant, la vanne de contournement étant configurée de sorte que lorsque le différentiel de pression entre la pression d'huile dans la première chambre d'actionnement et la pression de carburant dans la seconde chambre d'actionnement, s'abaisse en dessous d'une valeur prédéterminée de différentiel de pression, le piston se déplace d'une position normale de fonctionnement autorisant l'huile du circuit d'huile à traverser la vanne en direction de l'échangeur de chaleur, à une position de contournement interdisant à cette huile de circuler en direction de l'échangeur de chaleur.

L'invention propose ainsi une solution simple et fiable pour répondre à la problématique de risque de fuite dans les échangeurs de chaleur carburant / huile des turbomachines d'aéronef. La fiabilité provient en particulier de la nature passive de la vanne de contournement de l'échangeur, puisque son piston forme un organe d'actionnement commandé directement et hydrauliquement par les pressions d'huile et de carburant. Pour la conception de la vanne de contournement, la valeur prédéterminée de différentiel de pression entre l'huile et le carburant est fixée de manière à traduire un cas anormal de baisse de pression de l'huile relativement à celle du carburant, et de préférence un cas où le différentiel de pression s'inverse entre l'huile et le carburant. Une telle situation est en effet susceptible de générer une fuite « Fuel-in-Oil » dans l'échangeur, mais elle est avantageusement évitée par l'actionnement immédiat du piston dans sa position de contournement, permettant à l'huile de contourner l'échangeur et éviter ainsi son risque de contamination par le carburant.

Enfin, il est noté qu'en étant couplée à une architecture garantissant une pression d'huile supérieure à la pression carburant dans l'échangeur, la vanne de contournement mise en oeuvre dans l'invention permet de s'affranchir des contraintes de dimensionnement des enceintes d'huile du moteur, sans pour autant risquer des fuites « Fuel-in-Oil ». Il en résulte avantageusement une sécurité accrue, sans impact négatif sur la masse de l'ensemble.

L'invention présente par ailleurs au moins l'une des caractéristiques optionnelles suivantes, prises isolément ou en combinaison.

De préférence, la vanne de contournement comporte de plus un moyen élastique de rappel forçant le piston vers sa position de contournement, le moyen élastique de rappel étant préférentiellement un ressort de compression. La force développée par ce moyen élastique de rappel sur le piston s'ajoute ainsi aux forces résultant du différentiel de pression appliqué par l'huile et le carburant. Sa présence permet en particulier de générer un déplacement du piston, dans sa position de contournement, au moment de l'égalisation des pressions entre l'huile et le carburant, voire même avant cette égalisation, lorsque la pression de l'huile reste encore légèrement supérieure à celle du carburant. Ce moyen élastique de rappel peut également servir à compenser d'éventuelles pertes de charges, en particulier dans l'échangeur. De par la possibilité de fixer librement son tarage, il constitue plus généralement un degré de liberté supplémentaire dans la conception de l'ensemble.

De préférence, la vanne de contournement est une vanne à piston tiroir. D'autres conceptions de vanne sont néanmoins possibles, sans sortir du cadre de l'invention.

De préférence, la vanne de contournement comporte :
- le piston tiroir, comportant un premier passage annulaire d'huile ainsi qu'un second passage annulaire d'huile séparés axialement l'un de l'autre ;
- une première entrée d'huile et une première sortie d'huile débouchant chacune dans l'espace de coulissement du corps de vanne, les premières entrée et sortie d'huile communiquant l'une avec l'autre par l'intermédiaire du premier passage annulaire d'huile lorsque le piston adopte sa position normale de fonctionnement, la première sortie d'huile communiquant avec une admission d'huile de l'échangeur de chaleur ;
- une seconde entrée d'huile et une seconde sortie d'huile débouchant chacune dans l'espace de coulissement du corps de vanne, les secondes entrée et sortie d'huile communiquant l'une avec l'autre par l'intermédiaire du second passage annulaire d'huile lorsque le piston adopte sa position normale de fonctionnement, la seconde entrée d'huile communiquant avec un échappement d'huile de l'échangeur de chaleur ;
et dans la position de contournement du piston tiroir, celui-ci :
- interdit la communication entre les premières entrée et sortie d'huile ;
- interdit la communication entre les secondes entrée et sortie d'huile ;
- assure la communication entre la première entrée d'huile et la seconde sortie d'huile, par l'intermédiaire du premier ou du second passage annulaire d'huile.

De préférence, la vanne de contournement comporte en outre une troisième entrée d'huile débouchant dans la première chambre d'actionnement, ainsi qu'une entrée de carburant débouchant dans la seconde chambre d'actionnement.

De préférence, la troisième entrée d'huile, débouchant dans la première chambre d'actionnement, communique avec la seconde sortie d'huile, ou avec la première entrée d'huile.

De préférence, l'entrée de carburant, débouchant dans la seconde chambre d'actionnement, communique avec une admission de carburant de l'échangeur de chaleur, ou avec un échappement de carburant de ce même échangeur.

De préférence, la vanne de contournement comporte un capteur de position de son piston dans l'espace de coulissement du corps de vanne.

De préférence, le circuit d'huile de lubrification comporte au moins une enceinte à lubrifier, de préférence une enceinte de palier de roulement et/ou une enceinte d'huile du boîtier d'entraînement d'accessoires.

Enfin, l'invention a également pour objet une turbomachine d'aéronef comportant un tel ensemble, la turbomachine étant de préférence un turboréacteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique de côté d'un turboréacteur selon l'invention ;
[Fig. 2] représente une vue schématique d'un ensemble selon un mode de réalisation préféré de l'invention, équipant le turboréacteur montré sur la figure précédente ;
[Fig. 3] est une vue plus détaillée d'un échangeur de chaleur et de sa vanne de contournement, équipant l'ensemble représenté sur la figure 2, et représenté avec le piston de la vanne occupant une position normale de fonctionnement ;
[Fig. 4] est une vue similaire à celle de la figure 3, avec le piston de la vanne de contournement occupant une position de contournement ;
[Fig. 5] est une vue schématique de l'échangeur, montrant un piquage de carburant différent de celui du mode de réalisation des figures 2 à 4 ; et
[Fig. 6] est une vue schématique de la vanne de contournement, montrant un piquage d'huile différent de celui du mode de réalisation des figures 2 à 4.

### EXPOSÉ DÉTAILLÉ DE MODES DE RÉALISATION PRÉFÉRÉS

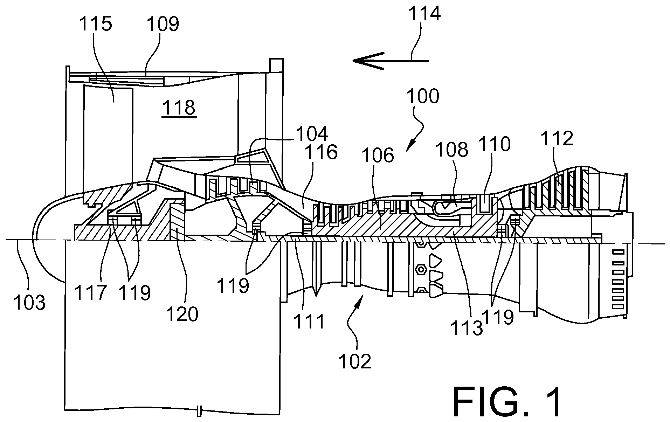

En référence à la figure 1, il est représenté un turboréacteur 100 à double flux et à double corps. Le turboréacteur 100 comporte de façon classique un générateur de gaz 102 de part et d'autre duquel sont agencés un compresseur basse pression 104, et une turbine basse pression 112. Le générateur de gaz 102 comprend un compresseur haute pression 106, une chambre de combustion 108 et une turbine haute pression 110. Par la suite, les termes « avant » et « arrière » sont considérés selon une direction 114 opposée à la direction d'écoulement principale des gaz au sein du turboréacteur, cette direction 114 étant parallèle à l'axe longitudinal 103 du turboréacteur.

Le compresseur basse pression 104 et la turbine basse pression 112 forment un corps basse pression, et sont reliés l'un à l'autre par un arbre basse pression 111 centré sur l'axe 103. De même, le compresseur haute pression 106 et la turbine haute pression 110 forment un corps haute pression, et sont reliés l'un à l'autre par un arbre haute pression 113 centré sur l'axe 103 et agencé autour de l'arbre basse pression 111. Les arbres sont supportés par des paliers de roulement 119, qui sont lubrifiés en étant agencés dans des enceintes pressurisées d'huile (non référencées sur la figure 1). Il en est de même pour le moyeu de soufflante 117, également supporté par des paliers de roulement 119 agencés dans une ou plusieurs enceintes pressurisées d'huile.

Le turboréacteur 100 comporte par ailleurs, à l'avant du générateur de gaz 102 et du compresseur basse pression 104, une soufflante 115 qui est ici agencée directement à l'arrière d'un cône d'entrée d'air du moteur. La soufflante 115 est rotative selon l'axe 103, et entourée d'un carter de soufflante 109. Cette soufflante est préférentiellement entraînée indirectement par l'arbre basse pression 111, via un réducteur 120, ce qui lui permet de tourner avec une vitesse plus lente.

En outre, le turboréacteur 100 définit une veine primaire 116 destinée à être traversée par un flux primaire, ainsi qu'une veine secondaire 118 destinée à être traversée par un flux secondaire situé radialement vers l'extérieur par rapport au flux primaire.

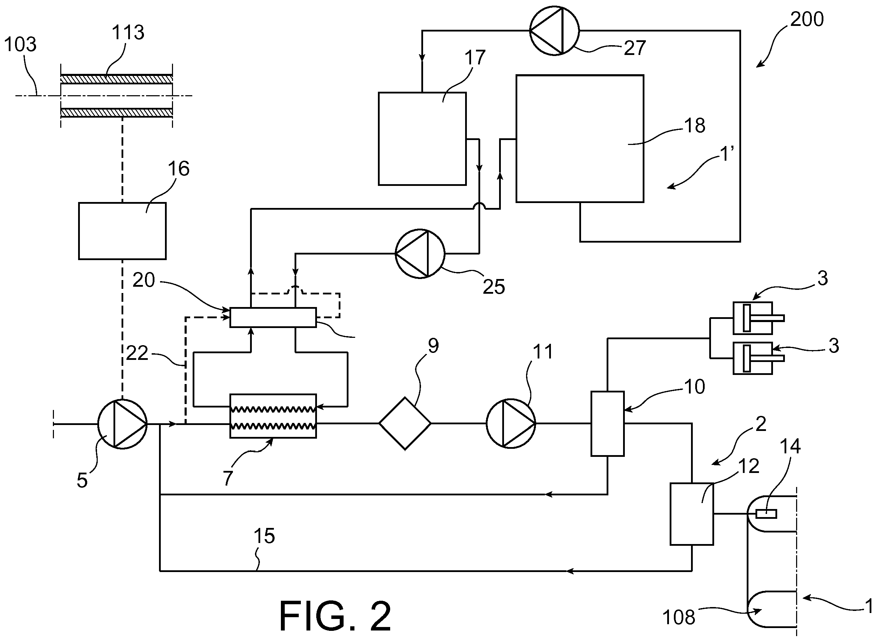

La figure 2 représente un ensemble 200 du turboréacteur montré sur la figure précédente. Il comporte deux sous-ensembles, à savoir un dispositif 1 d'alimentation en carburant du turboréacteur, ainsi qu'un circuit d'huile de lubrification 1'.

Pour ce qui concerne le dispositif 1, celui-ci est dédié à l'alimentation en carburant de la chambre de combustion 108, et de systèmes hydrauliques 3 tels que des vérins hydrauliques et des commandes hydrauliques de servovalves dédiés à la commande de géométries variables du type de celles mentionnées précédemment. Le dispositif 1 comporte un circuit 2 d'alimentation en carburant de la chambre de combustion 108. Sur ce circuit d'alimentation 2 sont installés en série, dans le sens de circulation du carburant, une pompe basse pression 5, un échangeur de chaleur carburant / huile 7, un filtre principal de carburant 9, une pompe haute pression 11, une vanne de commande 10, et une unité de dosage de carburant 12. Le circuit 2 débouche, en aval de l'unité de dosage 12, sur des injecteurs 14 dans la chambre de combustion 108.

La pompe basse pression 5 et la pompe haute pression 11 peuvent être actionnées par un arbre commun, de préférence l'arbre haute pression 113, de préférence via un boîtier d'entraînement d'accessoires 16 de la turbomachine, dit « boîtier AGB ». La pompe haute pression 11 peut ainsi être une pompe volumétrique, par exemple à engrenages. La pompe basse pression 5 peut être quant à elle une pompe cinétique, en particulier une pompe centrifuge.

L'échangeur de chaleur 7 permet de refroidir l'huile du circuit 1' qui sera décrit ci-après, tandis que le filtre 9 permet d'arrêter les impuretés pouvant causer des dommages et/ou des blocages potentiels à l'unité de dosage de carburant 12 ou aux injecteurs 14. De manière connue, l'unité de dosage de carburant 12 dose le débit de carburant fourni aux injecteurs 4 de la chambre de combustion 108.

Le dispositif d'alimentation 1 comporte aussi un circuit 15 de récupération de carburant reliant l'unité de dosage de carburant 12 au circuit d'alimentation 2, de préférence entre la pompe basse pression 5 et l'échangeur de chaleur 7. L'excès de débit de carburant fourni à l'unité de dosage de carburant 12 peut ainsi être retourné, à travers ce circuit de récupération 15, en amont de l'échangeur de chaleur 7. La vanne de commande 10, ou régulateur, permet de répartir le débit de carburant entre la chambre de combustion 108 et les systèmes hydrauliques 3.

Le circuit d'huile de lubrification 1' a été représenté uniquement partiellement, puisque certains composants ont été volontairement retirés pour davantage de clarté. En plus de l'échangeur de chaleur 7 qui appartient également au circuit d'huile de lubrification 1', ce dernier comporte un réservoir d'huile 17 ainsi qu'au moins une enceinte pressurisée à lubrifier 18, comme une enceinte de palier de roulement ou une enceinte d'huile du boîtier d'entraînement accessoires 16. Les autres composants non-représentés du circuit d'huile 1' sont conventionnels, comme une vanne de pressurisation d'huile, un filtre à huile, etc.

Entre le réservoir d'huile 17 et l'enceinte / les enceintes à lubrifier 18, il est aussi prévu une pompe d'alimentation en huile 25, également dite pompe à huile principale, préférentiellement agencée en amont d'une vanne de contournement 20 qui sera décrite ci-après. Par ailleurs, une ou plusieurs pompes 27 de récupération d'huile permettent de retourner l'huile récupérée dans les enceintes 18, vers le réservoir 17.

Comme évoqué ci-dessus, l'échangeur de chaleur carburant / huile 7 permet de transférer les réjections thermiques du moteur, récupérées par l'huile sortant de l'enceinte 18, vers le carburant servant alors de source froide. Par ailleurs, le carburant réchauffé par l'huile est ensuite envoyé dans la chambre de combustion 108, ce qui permet d'améliorer le rendement de combustion.

L'ensemble 200 comporte également une vanne de contournement 20, également dénommée vanne « by-pass », et préférentiellement intégrée au circuit d'huile 1' en étant associée à l'échangeur 7. Cette vanne de contournement 20 permet en effet à l'huile du circuit 1', dans certaines conditions de fonctionnement qui seront détaillées ci-après, de circuler à travers ce circuit 1' sans passer par l'échangeur 7, c'est-à-dire en le contournant.

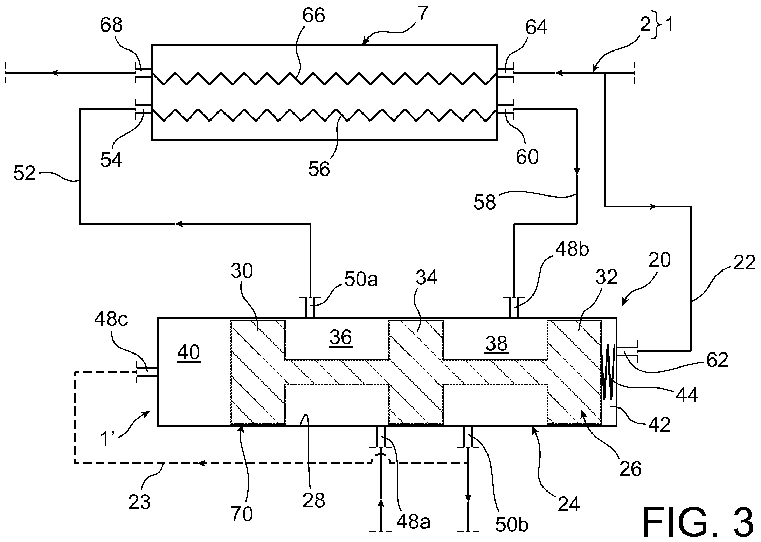

La vanne de contournement 20 est de nature passive, en ce sens qu'elle est commandée hydrauliquement par l'huile du circuit 1' et par le carburant du dispositif 1. Pour ce faire, des canalisations de piquage 22, 23 permettent de dériver une partie de l'huile et du carburant vers la vanne 20 pour en assurer sa commande, comme cela sera expliqué à présent en référence à la figure 3.

Sur cette figure 3, il est représenté de manière assez schématique la vanne de contournement 20, selon un mode de réalisation préféré de l'invention. La vanne 20 comporte un corps de vanne 24, dans lequel se trouve un piston tiroir 26 commandé de manière passive par la pression du carburant dans le circuit d'alimentation 2 du dispositif 1, et par la pression d'huile dans le circuit 1'. Le piston tiroir 26 est logé mobile dans un espace de coulissement cylindrique 28, formé à l'intérieur du corps de vanne 24. Ce piston 26 présente une première extrémité pleine 30, opposée axialement à une seconde extrémité pleine 32. Entre ces deux extrémités 30, 32, il est prévu une portion pleine intermédiaire 34, qui sépare un premier passage annulaire d'huile 36 d'un second passage annulaire d'huile 38. Plus précisément, le premier passage d'huile 36 prend la forme d'une gorge annulaire pratiquée à la surface extérieure du piston tiroir 26, en étant délimitée axialement par la première extrémité 30 et par la portion pleine intermédiaire 34. De manière analogue, le second passage d'huile 38 prend également la forme d'une gorge annulaire pratiquée à la surface extérieure du piston tiroir 26, en étant délimitée axialement par la portion pleine intermédiaire 34 et la seconde extrémité 32 du piston. Dans l'espace de coulissement 28, le corps de vanne 24 délimite, avec la première extrémité 30 du piston, une première chambre d'actionnement à l'huile 40. A l'opposé, toujours dans l'espace de coulissement 28, le corps de vanne 24 délimite avec la seconde extrémité 32 du piston une seconde chambre d'actionnement 42 alimentée en carburant. De par cette conception, le piston 26 est donc soumis à un différentiel de pression entre l'huile et le carburant, qui exercent respectivement des efforts sur les première et seconde extrémités opposées 30, 32 de ce piston. A ce différentiel de pression, s'ajoute préférentiellement une force mécanique résultant d'un ressort de compression 44 dont une extrémité est en appui sur un fond du corps de vanne 24, et dont l'extrémité opposée est en appui sur la seconde extrémité 32 du piston, pour forcer ce dernier en direction de la première chambre d'actionnement à l'huile 40.

Plusieurs entrées et sorties hydrauliques débouchent dans l'espace de coulissement 28 du piston 26.

Il s'agit d'abord d'une première entrée d'huile 48a et d'une première sortie d'huile 50a. La première entrée d'huile 48a est raccordée au circuit d'huile 1', par exemple en aval de l'enceinte à lubrifier, pour pouvoir être alimentée en huile provenant de cette enceinte. La première sortie d'huile 50a est raccordée par une canalisation 52 à une admission d'huile 54, prévue sur le circuit d'huile 56 de l'échangeur 7.

Il s'agit ensuite d'une seconde entrée d'huile 48b et d'une seconde sortie d'huile 50b, toutes les deux décalées axialement des premières entrée et sortie 48a, 50a. La seconde entrée d'huile 48b est raccordée par une canalisation 58 à un échappement d'huile 60, prévu sur le circuit d'huile 56 de l'échangeur 7. La seconde sortie d'huile 50b est quant à elle raccordée au circuit 1', de manière par exemple à pouvoir renvoyer l'huile en direction des enceintes 18.

Enfin, la vanne de contournement comporte également une troisième entrée d'huile 48c débouchant dans la première chambre d'actionnement à l'huile 40, ainsi qu'une entrée de carburant 62 débouchant dans la seconde chambre d'actionnement au carburant 42. La troisième entrée d'huile 48c est raccordée à la canalisation de piquage d'huile 23, pour être alimentée par de l'huile provenant de la seconde sortie 50b, à proximité et en aval de laquelle est également raccordée cette canalisation de piquage d'huile 23. L'entrée de carburant 62 est quant à elle raccordée à la canalisation de piquage de carburant 22, dont l'extrémité opposée est raccordée à proximité et en amont d'une admission de carburant 64, prévue sur le circuit de carburant 66 de l'échangeur 7. A cet égard, il est noté que ce circuit 66 se termine par un échappement de carburant 68, qui renvoie le carburant réchauffé vers le filtre 9 du circuit d'alimentation 2.

Sur la figure 3, le piston tiroir 26 est agencé dans une position normale de fonctionnement, dans laquelle la pression d'huile en sortie de la vanne 20 est très nettement supérieure à la pression de carburant en entrée de l'échangeur 7. Cela se traduit par une pression hydraulique dans la première chambre d'actionnement 40 qui est largement supérieure à la pression hydraulique dans la seconde chambre d'actionnement 42, au point que le différentiel de pression observé sur le piston tiroir 26 soit suffisant pour compresser intégralement le ressort 44. Dans cette position normale de fonctionnement, le piston 26 se trouve ainsi en butée ou proche du fond de l'espace de coulissement 28 contre lequel le ressort 44 s'appuie, réduisant ainsi à une valeur nulle ou faible le volume de la seconde chambre d'actionnement au carburant 42.

En fonctionnement normal de l'ensemble 200, il est donc prévu que la pression d'huile dans le circuit 1' soit nettement supérieure à la pression de carburant dans le dispositif d'alimentation 1, de sorte qu'en cas de défaillance dans l'échangeur 7, il n'y ait pas de risque de fuite « Fuel-in-Oil ». C'est grâce à ce différentiel de pression, qui se retrouve appliqué sur le piston tiroir 26, que ce dernier est plaqué dans le fond de l'espace de coulissement 28, dans sa position normale de fonctionnement. Dans cette position, les premières entrée et sortie d'huile 48a, 50a se retrouvent chacune radialement en regard du premier passage annulaire d'huile 36 dans lequel elles débouchent, ce qui leur permet de communiquer l'une avec l'autre. De plus, les secondes entrée et sortie d'huile 48b, 50b se retrouvent elles aussi chacune radialement en regard du second passage annulaire d'huile 38 dans lequel elles débouchent, ce qui leur permet de communiquer l'une avec l'autre.

De ce fait, l'huile provenant du circuit 1' pénètre dans la vanne 20 par la première sortie 48a, pour ensuite emprunter le premier passage annulaire d'huile 36, et s'extraire de la vanne par la première sortie d'huile 50a. L'huile rejoint ensuite l'admission 54 du circuit d'huile 56 de l'échangeur 7, au sein duquel se produit l'échange de chaleur avec le carburant circulant à travers le circuit de carburant 66 de ce même échangeur. A la sortie de l'échangeur, l'huile emprunte l'échappement 60 et la canalisation 58 pour rejoindre la seconde entrée 48b de la vanne 20. Elle circule ensuite à travers le second passage annulaire d'huile 38, pour s'extraire de la vanne par la seconde sortie d'huile 50b, à partir de laquelle l'huile rejoint une partie aval du circuit d'huile de lubrification 1'.

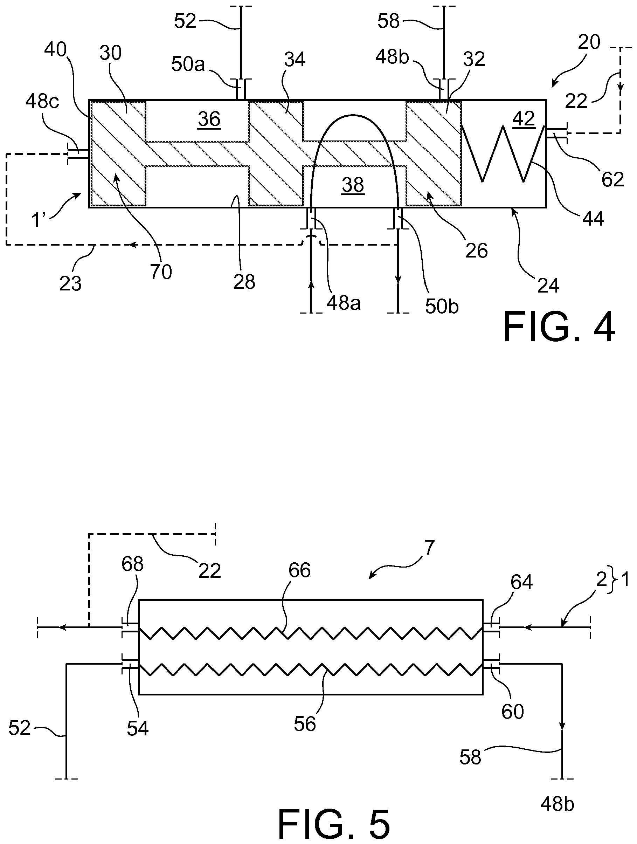

La vanne de contournement 20 est configurée de sorte que lorsque le différentiel de pression hydraulique sur le piston 26 s'abaisse en dessous d'une valeur prédéterminée de différentiel de pression, ce piston 26 se déplace de la position normale de fonctionnement autorisant l'huile du circuit 1' à traverser la vanne 20 en direction de l'échangeur 7, comme montré sur la figure 3, à une position de contournement montrée sur la figure 4, interdisant à cette huile de circuler en direction de l'échangeur 7.

La figure 4 montre ainsi la position de contournement du piston tiroir 26, occupée suite à un déplacement de ce dernier, résultant de l'action combinée du ressort 44 et du différentiel de pression abaissé qui s'applique aux extrémités opposées de ce piston. Dans cette position, le piston 26 est plaqué contre une extrémité opposée de l'espace de coulissement 28, avec le ressort 44 détendu. Ce déplacement du piston 26 entraîne également une modification des positions relatives entre d'une part les entrées et sorties d'huile 48a, 48b, 50a, 50b, et d'autre part les passages annulaires d'huile 36, 38. Ainsi, cette position de contournement interdit la communication entre les premières entrée et sortie d'huile 48a, 50a, et interdit également la communication entre les secondes entrée et sortie d'huile 48b, 50b. En revanche, la première entrée d'huile 48a et la seconde sortie d'huile 50b se trouvent toutes les deux en regard radialement du second passage annulaire d'huile 38 dans lequel elles débouchent, ce qui leur permet de communiquer l'une avec l'autre, et de provoquer le contournement souhaité de l'échangeur 7.

La valeur prédéterminée de différentiel de pression, conduisant à ce changement de position du piston 26, est préférentiellement fixée de manière à traduire un cas anormal de baisse de pression de l'huile, en comparaison de la pression du carburant. Il est précisé qu'une baisse de la pression de l'huile peut survenir suite à une défaillance de l'échangeur 7, conduisant à une fuite « Oil-in-Fuel ». Cette fuite n'est pas critique tant qu'elle ne s'inverse pas au sein de l'échangeur 7, puisqu'un phénomène inverse de fuite « Fuel-in-Oil » est considéré comme bien plus sévère et dangereux pour le turboréacteur. Par conséquent, la valeur prédéterminée de différentiel de pression est préférentiellement fixée à zéro ou aux alentours de zéro, à savoir au moment ou proche du moment où ce différentiel de pression entre l'huile et le carburant change de signe. Dans un tel cas de figure, la combinaison du différentiel de pression et de l'effort mécanique généré par le ressort provoque en effet le déplacement du piston 26 vers sa position de contournement.

Grâce à cette possibilité d'isoler l'échangeur 7 un peu avant ou lorsque la pression de carburant s'égalise avec celle de l'huile, le risque de fuite « Fuel-in-Oil » dans l'échangeur est avantageusement contenu. A cet égard, il est rappelé que la présence du ressort 44, et surtout la possibilité de fixer librement son tarage, permet avantageusement de provoquer la commutation passive de la vanne 20 à l'instant voulu. Si cet instant coïncide préférentiellement avec une situation d'égalisation des pressions d'huile et de carburant, ou une situation proche de celle-ci, le tarage du ressort peut alternativement être fixé pour provoquer la commutation de la vanne 20 alors même que l'huile présente encore une pression sensiblement supérieure à celle du carburant dans au moins une partie de l'échangeur.

Ainsi, lorsque la valeur prédéterminée de différentiel de pression est observée sur le piston 26, cela provoque immédiatement le déplacement de ce dernier dans sa position de contournement, permettant à l'huile de contourner l'échangeur 7 et éviter ainsi son risque de contamination par le carburant.

A partir de cet instant de commutation de la vanne passive 20, le pilote peut être informé de l'état de cette vanne, et disposer alors d'un temps de réaction donné, par exemple de l'ordre de 5 minutes, pour prendre une décision du type retour au ralenti et/ou arrêt du moteur en plein vol. Cette information peut être délivrée au pilote grâce à un capteur 70 de la position du piston 26 dans l'espace de coulissement 28 de la vanne 20.

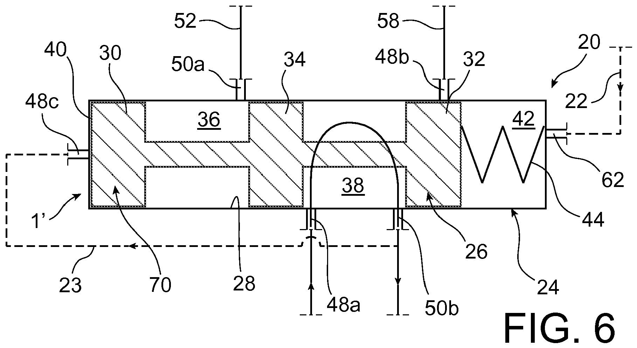

Les piquages d'huile et de carburant décrits ci-dessus peuvent différer. Par exemple, la canalisation de piquage de carburant 22 peut être raccordée à proximité et en aval de l'échappement de carburant 68, comme cela est montré sur la figure 5. Par ailleurs, la canalisation de piquage d'huile 23 peut être raccordée à proximité et en amont de la première entrée d'huile 48a, comme cela a été schématisé sur la figure 6. Bien entendu, toutes ces alternatives sont combinables.

D'autres modifications peuvent être apportées par l'homme du métier à l'invention qui vient d'être décrite, uniquement à titre d'exemples non limitatifs, et dont la portée est délimitée par les revendications annexées.

## Revendications

1. Ensemble (200) pour une turbomachine d'aéronef, comprenant un circuit d'huile de lubrification (1') ainsi qu'un dispositif (1) d'alimentation en carburant de la turbomachine, le circuit d'huile (1') et le dispositif d'alimentation en carburant (1) ayant en commun un échangeur de chaleur carburant / huile (7),
- **caractérisé en ce que** l'ensemble comporte également une vanne passive de contournement (20) permettant à l'huile du circuit d'huile de lubrification (1') de contourner l'échangeur (7), la vanne de contournement (20) comprenant un corps de vanne (24) ainsi qu'un piston (26) agencé mobile dans un espace de coulissement (28) pratiqué dans le corps de vanne, l'espace de coulissement (28) définissant, respectivement de part et d'autre du piston (26), une première chambre d'actionnement (40) alimentée par l'huile du circuit d'huile (1'), ainsi qu'une seconde chambre d'actionnement (42) alimentée en carburant du dispositif d'alimentation en carburant (1), la vanne de contournement (20) étant configurée de sorte que lorsque le différentiel de pression entre la pression d'huile dans la première chambre d'actionnement (40) et la pression de carburant dans la seconde chambre d'actionnement (42), s'abaisse en dessous d'une valeur prédéterminée de différentiel de pression, le piston (26) se déplace d'une position normale de fonctionnement autorisant l'huile du circuit d'huile (1') à traverser la vanne (20) en direction de l'échangeur de chaleur (7), à une position de contournement interdisant à cette huile de circuler en direction de l'échangeur de chaleur.

2. Ensemble selon la revendication 1, **caractérisé en ce que** la vanne de contournement (20) comporte de plus un moyen élastique de rappel (44) forçant le piston (26) vers sa position de contournement, le moyen élastique de rappel étant préférentiellement un ressort de compression (44).

3. Ensemble selon la revendication 1 ou 2, **caractérisé en ce que** la vanne de contournement (20) est une vanne à piston tiroir.

4. Ensemble selon la revendication 3, **caractérisé en ce que** la vanne de contournement (20) comporte :
- le piston (26) tiroir, comportant un premier passage annulaire d'huile (36) ainsi qu'un second passage annulaire d'huile (38) séparés axialement l'un de l'autre ;
- une première entrée d'huile (48a) et une première sortie d'huile (50a) débouchant chacune dans l'espace de coulissement (28) du corps de vanne, les premières entrée et sortie d'huile (48a, 50a) communiquant l'une avec l'autre par l'intermédiaire du premier passage annulaire d'huile (36) lorsque le piston (26) adopte sa position normale de fonctionnement, la première sortie d'huile (50a) communiquant avec une admission d'huile (54) de l'échangeur de chaleur (7) ;
- une seconde entrée d'huile (48b) et une seconde sortie d'huile (50b) débouchant chacune dans l'espace de coulissement (28) du corps de vanne, les secondes entrée et sortie d'huile (48b, 50b) communiquant l'une avec l'autre par l'intermédiaire du second passage annulaire d'huile (38) lorsque le piston (26) adopte sa position normale de fonctionnement, la seconde entrée d'huile (48b) communiquant avec un échappement d'huile (60) de l'échangeur de chaleur (7) ;
et **caractérisé en ce que** dans la position de contournement du piston (26) tiroir, celui-ci :
- interdit la communication entre les premières entrée et sortie d'huile (48a, 50a) ;
- interdit la communication entre les secondes entrée et sortie d'huile (48b, 50b) ;
- assure la communication entre la première entrée d'huile (48a) et la seconde sortie d'huile (50b), par l'intermédiaire du premier ou du second passage annulaire d'huile (36, 38).

5. Ensemble selon l'une quelconque des revendications précédentes, **caractérisé en ce que** la vanne de contournement (20) comporte en outre une troisième entrée d'huile (48c) débouchant dans la première chambre d'actionnement (40), ainsi qu'une entrée de carburant (62) débouchant dans la seconde chambre d'actionnement (42).

6. Ensemble selon la revendication 5, **caractérisé en ce que** la troisième entrée d'huile (48c), débouchant dans la première chambre d'actionnement (40), communique avec la seconde sortie d'huile (50b), ou avec la première entrée d'huile (48a).

7. Ensemble selon la revendication 5 ou 6, **caractérisé en ce que** l'entrée de carburant (62), débouchant dans la seconde chambre d'actionnement (42), communique avec une admission de carburant (64) de l'échangeur de chaleur (7), ou avec un échappement de carburant (68) de ce même échangeur.

8. Ensemble selon l'une quelconque des revendications précédentes, **caractérisé en ce que** la vanne de contournement (20) comporte un capteur de position (70) de son piston (26) dans l'espace de coulissement (28) du corps de vanne.

9. Ensemble selon l'une quelconque des revendications précédentes, **caractérisé en ce que** le circuit d'huile de lubrification (1') comporte au moins une enceinte à lubrifier (18), de préférence une enceinte de palier de roulement et/ou une enceinte d'huile du boîtier d'entraînement d'accessoires.

10. Turbomachine (100) d'aéronef comportant un ensemble (200) selon l'une quelconque des revendications précédentes, cette turbomachine étant de préférence un turboréacteur.

## Patentansprüche

1. Baugruppe (200) für eine Flugzeugturbomaschine, umfassend einen Schmierölkreislauf (1') sowie eine Kraftstoffzufuhrvorrichtung (1) für die Turbomaschine, wobei der Ölkreislauf (1') und die Kraftstoffzufuhrvorrichtung (1) gemeinsam einen Kraftstoff/Öl-Wärmetauscher (7) aufweisen,
- **dadurch gekennzeichnet, dass** die Baugruppe außerdem ein passives Bypass-Ventil (20) umfasst, das es dem Öl aus dem Schmierölkreislauf (1') ermöglicht, den Wärmetauscher (7) zu umgehen, wobei das Bypass-Ventil (20) einen Ventilkörper (24) sowie einen Kolben (26) umfasst, der beweglich in einem im Ventilkörper ausgebildeten Gleitraum (28) angeordnet ist, wobei der Gleitraum (28) jeweils auf beiden Seiten des Kolbens (26) eine erste Betätigungskammer (40), in die Öl aus dem Ölkreislauf (1') zugeführt wird, sowie eine zweite Betätigungskammer (42) definiert, in die Kraftstoff von der Kraftstoffzufuhrvorrichtung (1) zugeführt wird, wobei das Bypass-Ventil (20) so konfiguriert ist, dass, wenn die Druckdifferenz zwischen dem Öldruck in der ersten Betätigungskammer (40) und dem Kraftstoffdruck in der zweiten Betätigungskammer (42) unterhalb eines vorbestimmten Druckdifferenzwerts fällt, bewegt sich der Kolben (26) aus einer normalen Betriebsposition, in der es ermöglicht wird, dass das Öl aus dem Ölkreislauf (1') das Ventil (20) in Richtung des Wärmetauschers (7) passiert, in eine Bypass-Position, in der es verhindert wird, dass dieses Öl in Richtung des Wärmetauschers zirkuliert.

2. Baugruppe nach Anspruch 1, **dadurch gekennzeichnet, dass** das Bypass-Ventil (20) darüber hinaus ein elastisches Rückstellmittel (44) umfasst, das den Kolben (26) in seine Bypass-Position zwingt, wobei das elastische Rückstellmittel vorzugsweise eine Druckfeder (44) ist.

3. Baugruppe nach Anspruch 1 oder 2, **dadurch gekennzeichnet, dass** das Bypass-Ventil (20) ein Schieberkolbenventil ist.

4. Baugruppe nach Anspruch 3, **dadurch gekennzeichnet, dass** das Bypass-Ventil (20) Folgendes umfasst:
- den Schieberkolben (26), der einen ersten ringförmigen Ölkanal (36) sowie einen zweiten ringförmigen Ölkanal (38) umfasst, die axial voneinander getrennt sind;
- einen ersten Öleinlass (48a) und einen ersten Ölauslass (50a), die jeweils in den Gleitraum (28) des Ventilkörpers münden, wobei der erste Öleinlass und der erste Ölauslass (48a, 50a) über den ersten ringförmigen Ölkanal (36) miteinander in Verbindung stehen, wenn der Kolben (26) seine normale Betriebsposition einnimmt, wobei der erste Ölauslass (50a) mit einer Öleinlassöffnung (54) des Wärmetauschers (7) in Verbindung steht;
- einen zweiten Öleinlass (48b) und einen zweiten Ölauslass (50b), die jeweils in den Gleitraum (28) des Ventilkörpers münden, wobei der zweite Öleinlass und der zweite Ölauslass (48b, 50b) über den zweiten ringförmigen Ölkanal (38) miteinander in Verbindung stehen, wenn der Kolben (26) seine normale Betriebsposition einnimmt, wobei der zweite Öleinlass (48b) mit einer Ölauslassöffnung (60) des Wärmetauschers (7) in Verbindung steht;
und **dadurch gekennzeichnet, dass** in der Bypass-Position des Schieberkolbens (26) dieser:
- die Verbindung zwischen dem ersten Öleinlass und dem ersten Ölauslass (48a, 50a) verhindert;
- die Verbindung zwischen dem zweiten Öleinlass und dem zweiten Ölauslass (48b, 50b) verhindert;
- die Verbindung zwischen dem ersten Öleinlass (48a) und dem zweiten Ölauslass (50b) über den ersten oder den zweiten ringförmigen Ölkanal (36, 38) sicherstellt.

5. Baugruppe nach einem der vorhergehenden Ansprüche, **dadurch gekennzeichnet, dass** das Bypass-Ventil (20) ferner einen dritten Öleinlass (48c) umfasst, der in die erste Betätigungskammer (40) mündet, sowie einen Kraftstoffeinlass (62), der in die zweite Betätigungskammer (42) mündet.

6. Baugruppe nach Anspruch 5, **dadurch gekennzeichnet, dass** der dritte Öleinlass (48c), der in die erste Betätigungskammer (40) mündet, mit dem zweiten Ölauslass (50b) oder mit dem ersten Öleinlass (48a) in Verbindung steht.

7. Baugruppe nach Anspruch 5 oder 6, **dadurch gekennzeichnet, dass** der Kraftstoffeinlass (62), der in die zweite Betätigungskammer (42) mündet, mit einer Kraftstoffeinlassöffnung (64) des Wärmetauschers (7) oder mit einer Kraftstoffauslassöffnung (68) desselben Wärmetauschers in Verbindung steht.

8. Baugruppe nach einem der vorhergehenden Ansprüche, **dadurch gekennzeichnet, dass** das Bypass-Ventil (20) einen Positionssensor (70) seines Kolbens (26) im Gleitraum (28) des Ventilkörpers umfasst.

9. Baugruppe nach einem der vorhergehenden Ansprüche, **dadurch gekennzeichnet, dass** der Schmierölkreislauf (1') mindestens ein zu schmierendes Gehäuse (18), vorzugsweise ein Wälzlagergehäuse und/oder eine Ölkammer eines Komponenten-Antriebsgehäuses, umfasst.

10. Flugzeugturbomaschine (100), die eine Baugruppe (200) nach einem der vorhergehenden Ansprüche umfasst, wobei diese Turbomaschine vorzugsweise ein Turbostrahltriebwerk ist.

## Claims

1. Aircraft turbine engine assembly (200), comprising a lubricating oil circuit (1') as well as a fuel supply device (1) of the turbine engine, the oil circuit (1') and the fuel supply device (1) having in common a fuel/oil heat exchanger (7),
- **characterised in that** the assembly also includes a passive bypass valve (20) enabling the oil of the lubricating oil circuit (1') to bypass the exchanger (7), the bypass valve (20) comprising a valve body (24) as well as a piston (26) arranged to move in a sliding space (28) made in the valve body, the sliding space (28) defining, respectively on either side of the piston (26), a first actuating chamber (40) supplied with oil from the oil circuit (1'), as well as a second actuating chamber (42) supplied with fuel from the fuel supply device (1), the bypass valve (20) being configured so that when the differential pressure between the oil pressure in the first actuating chamber (40) and the fuel pressure in the second actuating chamber (42) drops below a predetermined differential pressure value, the piston (26) moves from a normal operating position allowing the oil of the oil circuit (1') to pass through the valve (20) in the direction of the heat exchanger (7), to a bypass position prohibiting this oil from circulating in the direction of the heat exchanger.

2. Assembly according to claim 1, **characterised in that** the bypass valve (20) in addition includes an elastic return means (44) forcing the piston (26) towards its bypass position, the elastic return means preferably being a compression spring (44).

3. Assembly according to claim 1 or 2, **characterised in that** the bypass valve (20) is a spool piston valve.

4. Assembly according to claim 3, **characterised in that** the bypass valve (20) includes:
- the spool piston (26), including a first annular oil passage (36) as well as a second annular oil passage (38) axially separated from one another;
- a first oil inlet (48a) and a first oil outlet (50a) each opening into the sliding space (28) of the valve body, the first oil inlet and outlet (48a, 50a) communicating with one another by means of the first annular oil passage (36) when the piston (26) adopts its normal operating position, the first oil outlet (50a) communicating with an oil intake (54) of the heat exchanger (7);
- a second oil inlet (48b) and a second oil outlet (50b) each opening into the sliding space (28) of the valve body, the first oil inlet and outlet (48b, 50b) communicating with one another by means of the second annular oil passage (38) when the piston (26) adopts its normal operating position, the second oil outlet (48b) communicating with an oil exhaust (60) of the heat exchanger (7);
and **characterised in that** in the bypass position of the spool piston (26), it:
- prohibits the communication between the first oil inlet and outlet (48a, 50a);
- prohibits the communication between the second oil inlet and outlet (48b, 50b);
- ensures the communication between the first oil inlet (48a) and the second oil outlet (50b), by means of the first or of the second annular oil passage (36, 38).

5. Assembly according to any one of the preceding claims, **characterised in that** the bypass valve (20) further includes a third oil inlet (48c) opening into the first actuating chamber (40), as well as a fuel inlet (62) opening into the second actuating chamber (42).

6. Assembly according to claim 5, **characterised in that** the third oil inlet (48c), opening into the first actuating chamber (40), communicates with the second oil outlet (50b), or with the first oil inlet (48a).

7. Assembly according to claim 5 or 6, **characterised in that** the fuel inlet (62), opening into the second actuating chamber (42), communicates with a fuel intake (64) of the heat exchanger (7), or with a fuel exhaust (68) of this same exchanger.

8. Assembly according to any one of the preceding claims, **characterised in that** the bypass valve (20) includes a position sensor (70) of its piston (26) in the sliding space (28) of the valve body.

9. Assembly according to any one of the preceding claims, **characterised in that** the lubricating oil circuit (1') includes at least one enclosure to be lubricated (18), preferably a roller bearing enclosure and/or an oil enclosure of the accessory gearbox.

10. Aircraft turbine engine (100) including an assembly (200) according to any one of the preceding claims, this turbine engine preferably being a turbojet engine.
